# EUROPEAN PATENT APPLICATION

(11) **EP 4 151 439 A1**
(43) Date of publication of application: **22.03.2023**
(21) Application number: 21197178.3
(22) Date of filing: 16.09.2021
(51) Int. Cl.: B60H 1/00, H01M 10/613, H01M 10/625, H01M 10/6561, H01M 10/663

(54) **VEHICLE**

(71) Applicant: VOLVO TRUCK CORPORATION, 405 08 Göteborg (SE)
(72) Inventor: LAUDET, Frédéric, 69200 VENISSIEUX (FR)
(74) Representative: Plasseraud IP

(57) **Abstract**

Vehicle (1) comprising a cab (3) defining an inner space configured to receive a driver, the vehicle (1) being at least partly electrically powered and comprising an electrically powered engine (7) and at least one battery compartment (20) housing at least one battery (8) configured to supply the electrically powered engine (7) with electrical energy, wherein the vehicle (1) further comprises an air conditioning system (21) configured to condition air within the inner space of the cab (3) and a venting system (25) configured to evacuate air from the inner space of the cab (3), wherein the venting system (25) comprises a duct (26) having an inlet (27) arranged within the inner space of the cab (3) and an outlet (28) arranged within the battery compartment (20).

## Description

### Technical Field

The invention relates to a vehicle and more particularly to a vehicle that is at least partly electrically powered.

### Background Art

Vehicles that are partly or totally electrically powered, such as hybrid, plug-in hybrid or full electric vehicles, use one or several batteries to supply an electrically powered engine with electrical energy.

To improve comfort of the vehicle, air within an inner space of a cab receiving the driver and possible other passengers can be conditioned, namely heated or cooled with respect to an ambient temperature, by an air conditioning system. As the air conditioning system is running, conditioned air is continuously admitted within the inner space of the cab by a venting system and evacuated via a ducting system and/or aeration device.

Known venting systems consists is one or several decompression venting outlets arranged in walls of the cab delimiting the inner space to evacuate air to an outside environment of the cab.

Such continuous circulation of conditioned air towards the outside environment results in a considerable waste of energy.

### Summary

This disclosure improves the situation.

It is proposed a vehicle comprising a cab defining an inner space configured to receive a driver, the vehicle being at least partly electrically powered and comprising an electrically powered engine and at least one battery compartment housing at least one battery configured to supply the electrically powered engine with electrical energy, wherein the vehicle further comprises an air conditioning system configured to condition air within the inner space of the cab and a venting system configured to evacuate air from the inner space of the cab,
wherein the venting system comprises a duct having inlet arranged within the inner space of the cab and an outlet arranged within the battery compartment.

Indeed, batteries of electrically powered vehicle operate in an efficient manner under specific conditions including a temperature condition. The invention eases meeting the temperature condition by using the conditioned air of the inner space cab to condition air within the battery compartment so that batteries may operate in an efficient manner. Such recycling of conditioned air reduces waste of energy.

In an embodiment, the vehicle may consist in a commercial vehicle, comprising a chassis adjoining the cab in a longitudinal direction X, wherein the battery compartment is attached to the chassis.

### Brief Description of Drawings

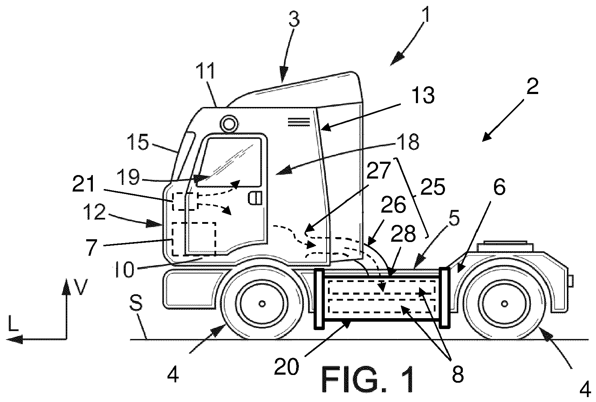

Other features, details and advantages will be shown in the following detailed description and on figure 1, which is a lateral view of a vehicle according to an embodiment of the invention, wherein a duct of a venting system guides air within an inner space of a cab, conditioned by an air conditioning system, towards a battery compartment housing one or several batteries configured to supply an electrically powered engine with electrical energy.

### Description of Embodiments

Figure 1 represents a vehicle 1 according to an embodiment of the invention. In the represented embodiment, although not limited thereto, the vehicle 1 is a commercial vehicle of the kind tractor of a truck. The vehicle 1 comprises a frame 2 extending along a longitudinal direction L corresponding to a direction along which the vehicle 1 moves forward or rearward on a ground surface S. The frame 2 comprises a cab 3 defining an inner space with a driving place where a driver may seat, and a chassis 5 adjoining the cab 3 in the longitudinal direction L. Nevertheless, the invention applies to any other kind of commercial vehicle as well as to any kind of passenger vehicle.

The cab 3 comprises:
- a floor 10 and a roof 11 delimiting the inner space in a vertical direction V perpendicular to the ground surface S and to the longitudinal direction L,
- opposite front 12 and back 13 walls delimiting the inner space in the longitudinal direction L, the front wall 12 being provided with a windshield 15 on an upper part, close to the roof 11, and with a front control panel on a lower part, close to the floor 11, behind a steering wheel,
- side walls 18 delimiting the inner space in a transverse direction perpendicular to the longitudinal L and vertical V directions, the side walls 18 being provided with respective driver and passenger doors 19.

The chassis 5 preferably comprises two beams 6 parallel to each other along the longitudinal direction X. The beams 6 present respective internal surfaces facing each other and respective external surfaces opposite the internal surfaces.

The cab 3 and the chassis 5 are mounted on wheels 4 driven by a driving system. In this respect, the vehicle 1 is at least partly electrically powered, such as a hybrid, plug-in hybrid or full electric commercial vehicle. The driving system then comprises an electrically powered engine 7 and one or several batteries 8 to supply the electrically powered engine 7 with electrical energy.

The batteries 8 are housed in one or several battery compartments 20. In the represented embodiment where the vehicle 1 is a commercial vehicle, each battery compartment 20 is attached to the chassis 5 and, in particular, to the external surface of the beam 6. In other embodiments, the battery compartment 20 could be arranged in any other suitable location, outside the inner space of the cab 3. For example, the battery compartment 20 could be arranged in a front engine space, accommodating the electrically powered engine 7 and other components of the driving system, especially in the case of a passenger vehicle.

To improve the comfort of the driver, the vehicle 1 further comprises an air conditioning system 21 configured to impart a circulation of air conditioned, especially heated or cooled, within the inner space of the cab 3. In figure 1, the circulation of conditioned air is represented by dashed arrows.

To evacuate air continuously fed into the inner space of the cab 3 as the air conditioning system 21 is running, a venting system 25 is provided. According to the invention, the venting system 25 comprises a duct 26 having inlet 27 arranged within the inner space of the cab 3, for example through the back wall 13, and an outlet 28 arranged within the battery compartment 20. Between the inlet 27 and the outlet 28, the duct 16 may extend outside.

The duct 26 between the cab 3 and the battery compartment 20 reinjects air leaving the inner space of the cab 3 into the battery compartment 20 to keep the batteries 8 at optimum temperature condition. In addition, a significant air flow, for example of 10 kg/min, can be obtained to efficiently condition air surrounding the batteries.

For example, supposing the air in the inner space of the cab 3 is around 20°C while, in winter, an outside temperature can be 0°C or less, then the temperature difference of about 20°C provides a significant contribution for maintaining temperature condition within the battery compartment 20. Similarly, in summer where the outside temperature can be up to 40°C, the temperature difference also significantly helps in maintaining the temperature condition within the battery compartment 20. With such energy recycling, up to 10 % of energy can be saved.

## Claims

1. Vehicle (1) comprising a cab (3) defining an inner space configured to receive a driver, the vehicle (1) being at least partly electrically powered and comprising an electrically powered engine (7) and at least one battery compartment (20) housing at least one battery (8) configured to supply the electrically powered engine (7) with electrical energy, wherein the vehicle (1) further comprises an air conditioning system (21) configured to condition air within the inner space of the cab (3) and a venting system (25) configured to evacuate air from the inner space of the cab (3), the vehicle being **characterized in that** the venting system (25) comprises a duct (26) having inlet (27) arranged within the inner space of the cab (3) and an outlet (28) arranged within the battery compartment (20).

2. Vehicle (1) according to claim 1 consisting in a commercial vehicle, comprising a chassis (5) adjoining the cab (3) in a longitudinal direction (L), wherein the battery compartment (20) is attached to the chassis (5).
